# EUROPÄISCHE PATENTANMELDUNG

(11) **EP 2 899 218 A1**
(43) Veröffentlichungstag der Anmeldung: **29.07.2015**
(21) Anmeldenummer: 14000225.4
(22) Anmeldetag: 22.01.2014
(51) Int. Cl.: C08G 18/62, C08G 18/67, C08G 18/68, C08G 18/09, C09D 175/04, C09D 175/16

(54) **Lackzusammensetzungen**

(71) Anmelder: Hesse GmbH & Co. KG, 59075 Hamm (DE)
(72) Erfinder: Schriever, Jochen, 59073 Hamm (DE)
(74) Vertreter: Grünecker Patent- und Rechtsanwälte PartG mbB

(57) **Zusammenfassung**

Die vorliegende Erfindung betrifft eine Lackzusammensetzung, umfassend einen Stammlack, enthaltend mindestens eine hydroxylgruppenhaltige Komponente, und einen Härter, enthaltend mindestens ein Polyisocyanat, dadurch gekennzeichnet, dass das Gewichtsverhältnis von hydroxylgruppenhaltiger Komponente zu Polyisocyanat 1 : 2 bis 1 : 50 beträgt. Die erfindungsgemäße Lackzusammensetzung ermöglicht eine Reduzierung des Arbeitsaufwands und der Kosten bei der Lackierung, da weniger Lagen der Lackzusammensetzung benötig werden im Vergleich zu kommerziell erhältlichen Produkten, um ein optimales Lackierergebnis im Hinblick auf den Aspekt Beifallen zu erreichen.

## Beschreibung

Die vorliegende Erfindung betrifft eine Lackzusammensetzung, ein Verfahren zu deren Herstellung, deren Verwendung sowie eine daraus durch Trocknung und Härtung resultierende Beschichtung.

Lacke finden Verwendung als Oberflächenschutz und zur Versiegelung, um Materialien gegen Verkratzung, Abrieb oder Beschädigung zu schützen. Insbesondere Möbelstücke werden lackiert, um das eigentliche Material, wie z.B. Holz, zu schützen. Dabei werden häufig Klarlacke verwendet, damit die ursprüngliche Struktur des Materials weiterhin sichtbar bleibt. Üblicherweise wird zunächst eine Grundierung auf der Oberfläche aufgebracht, die dafür sorgt, dass die erhaltene Oberfläche glatt und eben ist. Auf diese geglättete Oberfläche wird anschließend ein Decklack aufgebracht.

Holz besitzt eine unregelmäßige Oberfläche und enthält Poren, die unterschiedlich sind und Lacke unterschiedlich aufnehmen. Daher wird üblicherweise beim Lackieren zunächst eine Grundierschicht aufgebracht, um eine glatte, einheitliche und ebene Oberfläche zu erzeugen. Die Grundierschicht dient außerdem dazu, eine gewisse Fülle auf dem zu lackierendem Material zu erzeugen. Allerdings kann die aufzubringende Grundierschicht an einigen Stellen stärker aufgenommen werden bzw. einsinken, so dass eine ungleichmäßige Oberfläche erhalten wird. Dies wird zudem verstärkt durch ein Schrumpfen der Grundierschicht beim Trocknen, wobei das in der Grundierung enthaltene Lösemittel entfernt wird. Dieses sogenannte Beifallen führt zu einer optisch unruhig wirkenden Oberfläche und zu einer Glanzreduzierung und Schleierbildung. Es ist daher notwendig, dass eine Grundierschicht sowohl Fülle erzeugen kann als auch ein geringes Beifallen aufweist.

Die EP-A-2 113 523 betrifft Beschichtungssysteme auf der Basis hochmolekularer, wässriger Polyurethandispersionen, die zur Beschichtung von Holz, Kunststoffen und Leder eingesetzt werden. Der darin beschriebene Lack ist ein schnelltrocknender Lack, der vor der Strahlenhärtung eine gute Blockfestigkeit besitzt.

In der Druckschrift EP-A-0 942 022 werden Polyurethanpolymerisate beschrieben, die zur Herstellung von Beschichtungen auf flexiblen und saugfähigen Substraten, z.B. auf Holz, verwendet werden. Die so erzeugten Überzüge sind vorzugsweise klebfrei und besitzen eine hohe Härte.

Die Druckschrift EP-A-0 872 502 beschreibt wasserdispergierte, strahlenhärtbare Polyurethane, die Beschichtungen mit hoher Härte nach der Strahlenhärtung ergeben.

Die EP-A-0 753 531 betrifft wässrige Polyesteracrylaturethandispersionen, die nach Verdunsten des Wassers klebfreie, schleifbare Beschichtungen ergeben, die anschließend radikalisch und/oder strahlenchemisch zu kratzfesten und chemikalienbeständigen Überzügen härten.

Die Druckschrift EP-A-2 581 396 betrifft Beschichtungen und Lacke aus niedrigviskosen, wasserverdünnbaren Polyurethan(meth)acrylaten.

Die Druckschrift EP-A-1 743 909 betrifft ein Kunststoffextrudat mit einer Beschichtung, das z.B. auf Möbel aufgebracht werden kann. Allerdings wird hier ein Lack auf die Oberfläche eines Kunststoffextrudats aufgebracht und dieses Extrudat anschließend auf ein Möbelstück aufgebracht. Der Lack wird nicht direkt auf das Möbelstück aufgebracht. Somit wird das ursprüngliche Erscheinungsbild verändert, die ursprüngliche Optik bleibt nicht erhalten.

Die Druckschrift WO-A-2010/015386 betrifft ein Zweischichtbeschichtungssystem und dessen Verwendung bei der Automobillackierung. Die darin beschriebenen Lacke werden allerdings nur zur Lackierung von Metalloberflächen verwendet.

Auch die WO-A-2013/113893 betrifft Autolacke, die zur Erzeugung einer glatten, regelmäßigen Oberfläche eingesetzt werden. Allerdings werden auch hier die Lacke nur auf einer Metalloberfläche aufgebracht.

Die Aufgabe der vorliegenden Erfindung ist es, Lackzusammensetzungen bereitzustellen, die ein geringes Beifallen und eine gute Fülle besitzen.

Diese Aufgabe wird durch eine Lackzusammensetzung gelöst, die einen Stammlack, enthaltend mindestens eine hydroxylgruppenhaltige Komponente, und einen Härter, enthaltend mindestens ein Polyisocyanat, umfasst und dadurch gekennzeichnet ist, dass das Gewichtsverhältnis von hydroxylgruppenhaltiger Komponente zu Polyisocyanat 1 : 2 bis 1 : 50 beträgt.

Diese Aufgabe wird außerdem durch ein Verfahren zum Herstellen der Lackzusammensetzung, die Verwendung der Lackzusammensetzung sowie eine Beschichtung, umfassend die Lackzusammensetzung, gelöst.

Bevorzugte Ausführungsformen sind in den Unteransprüchen 2 bis 12 offenbart.

Die erfindungsgemäße Lackzusammensetzung, umfassend einen Stammlack, enthaltend mindestens eine hydroxylgruppenhaltige Komponente, und einen Härter, enthaltend mindestens eine isocyanatgruppenhaltige Komponente, ermöglichte überraschenderweise die Erzeugung einer besonders glatten Lackschicht. Insbesondere auf Holz war es möglich, eine ebene und glatte Schicht zu erzeugen, die auf dem Holz eine gewünschte Fülle erzeugt und gleichzeitig kein oder nur geringes Beifallen aufweist.

Erfindungsgemäß wird unter dem Begriff "Beifallen" verstanden, dass die Lackschicht Unregelmäßigkeiten und Unebenheiten, wie eingefallenen Oberflächen, aufweist. Solche Unebenheiten stören insbesondere das Erscheinungsbild des zu lackierenden Gegenstands. Ferner führt das Beifallen zu einer Schleierbildung und einem Glanzverlust. Diese Unebenheiten können dadurch entstehen, dass die aufgetragene Lackzusammensetzung an einigen Stellen stärker aufgenommen wird bzw. einsinkt und/oder durch ein Schrumpfen der Lackschicht beim Trocknen.

Unter dem Begriff "Fülle" wird erfindungsgemäß verstanden, dass die erfindungsgemäße Lackzusammensetzung die Oberfläche des zu lackierenden Materials auffüllt, d.h. bereits vorhandene Unebenheiten ausgleicht. Ferner wird auch ein Schutz des zu lackierenden Materials bewirkt.

Unter dem Begriff "hydroxylgruppenhaltige Komponente" wird erfindungsgemäß eine Verbindung verstanden, die mindestens eine freie OH-Gruppe besitzt.

Mit Hilfe der vorliegenden Erfindung kann eine Grundierschicht auf ein Material aufgebracht werden, um eine besonders glatte, einheitliche und ebene Oberfläche zu erzeugen und das Beifallen zu minimieren. Auf diese Grundierschicht kann dann eine weitere Schicht, z.B. eine Hochglanzlackschicht, aufgebracht werden.

Je nach Material und je nach gewünschten Eigenschaften kann die erfindungsgemäße Lackzusammensetzung durch geeignete Wahl der Komponenten des Stammlacks so variiert werden, um gezielt die gewünschten Eigenschaften zu erhalten. Enthält der Stammlack z.B. ein hydroxylgruppenhaltiges (Meth)acrylat, wird nahezu kein Beifallen beobachtet. Enthält der Stammlack ein Polyester(meth)acrylat, wird eine optimale Fülle erreicht. Die gewünschten Eigenschaften können materialspezifisch durch Wahl der jeweiligen Komponente bzw. Komponentenmischungen des Stammlacks angepasst werden, um ein optimales Verhältnis von Fülle und Beifallen, spezifisch abgestimmt auf die Eigenschaften des zu lackierenden Materials, zu erhalten.

Die Lackzusammensetzung in Übereinstimmung mit der vorliegenden Erfindung wird vorzugsweise als Grundierlackschicht für Holz verwendet. Durch Wahl der jeweiligen Zusammensetzung kann eine Grundierlackschicht erzeugt werden, die auf das jeweilige Material spezifisch angepasst ist, um eine möglichst glatte Oberfläche zu erhalten. So kann z.B. die Lackzusammensetzung spezifisch eingestellt werden, um gleichzeitig die gewünschte Fülle und ein geringes Beifallen zu erhalten.

Ferner kann mit der Lackzusammensetzung gemäß der vorliegenden Erfindung eine Grundierschicht erzeugt werden, die ein vergleichbares Beifallen aufweist, wie zurzeit am Markt befindliche Produkte, wobei allerdings die Anzahl der Lagen der Grundierschicht um 50% bis 75% reduziert wird im Vergleich zu kommerziell erhältlichen Lackzusammensetzungen. Die Grundierschicht besteht aus mindestens einer Lage, wobei eine erste Lage durch Auftragen und Trocknen der erfindungsgemäßen Lackzusammensetzung erzeugt wird. Auf diese erste Lage kann dann eine zweite Lage durch Auftragen und Trocknen der erfindungsgemäßen Lackzusammensetzung aufgebracht werden. Weitere Lagen können entsprechend erzeugt werden. Eine Reduzierung der Anzahl der Lagen der Grundierschicht führt daher zu einem geringeren Arbeitsaufwand. Außerdem ist die Transparenz in dicken Schichten deutlich verbessert gegenüber den auf dem Markt befindlichen Produkten.

In einer bevorzugten Ausführungsform in Verbindung mit einer der oben oder unten genannten Ausführungsformen ist die hydroxylgruppenhaltige Komponente ausgewählt aus mindestens einem hydroxylgruppenhaltigen (Meth)acrylat und/oder mindestens einem Polyester(meth)acrylat.

Unter hydroxylgruppenhaltigen (Meth)acrylaten im Sinne der Erfindung werden Verbindungen verstanden, die neben mindestens einer OH-Gruppe eine oder mehrere (Meth)acrylatgruppen enthalten. Hydroxylgruppenhaltige (Meth)acrylate können durch Ver- bzw. Umesterung von Acrylsäure, Methacrylsäure, Acrylsäureestern oder Methacrylsäurestern mit Polyolen hergestelt werden. Alternativ können durch ringöffnende Addition von Oxiranen mit Acrylsäure bzw. Methacrylsäure ebenfalls hydroxylgruppenhaltige (Meth)acrylate hergestellt werden. Vorzugsweise wird das hydroxylgruppenhaltige (Meth)acrylat ausgewählt aus Di-, Tri- Tetra- oder Penta(meth)acrylate mehrwertiger Alkohole wie Trimethylolpropan, Glycerin, Pentaerythrit, Ditrimethylolpropan, Dipentaerythrit, ethoxyliertes, propoxyliertes oder alkoxyliertes Trimethylolpropan, Glycerin oder Gemischen daraus. Besonders bevorzugt ist das hydroxylgruppenhaltige (Meth)acrylat ausgewählt aus Dipentaerythritolpentaacrylat, Pentaerythritoltriacrylat, Trimethylolpropantriacrylat, Tris-(2-hydroxyethyl)isocyanurattriacrylat, 1,6-Hexandioldimethacrylat, Gemischen daraus oder einem Gemisch aus Pentaerythritoltriacrylat und Pentaerythritoltetraacrylat. Insbesondere ist das hydroxylgruppenhaltige (Meth)acrylat ausgewählt aus Pentaerythritoltriacrylat oder einem Gemisch aus Pentaerythritoltriacrylat und Pentaerythritoltetraacrylat.

Die hydroxylgruppenhaltige Komponente weist vorzugsweise neben ungesättigten Verbindungen noch NCO-reaktive Verbindungen, insbesondere Hydroxylgruppen, auf. Über diese Hydroxylgruppen kann ein teilweiser oder vollständiger Einbau erfolgen.

In einer weiteren bevorzugten Ausführungsform in Verbindung mit einer der oben oder unten genannten Ausführungsformen ist die hydroxylgruppenhaltige Komponente ein Präpolymer eines hydroxylgruppenhaltigen (Meth)acrylats. Erfindungsgemäß wird unter einem Präpolymer eines hydroxylgruppenhaltigen (Meth)acrylats eine polymere organische Verbindung verstanden, die sich aus hydroxylgruppenhaltigem Acrylat und/oder -methacrylat zusammensetzt.

In einer weiteren bevorzugten Ausführungsform in Verbindung mit einer der oben oder unten genannten Ausführungsformen ist die hydroxylgruppenhaltige Komponente ausgewählt aus einem Polyester(meth)acrylat. Unter Polyester(meth)acrylat wird erfindungsgemäß eine polymere organische Verbindung verstanden, die sich aus Polyesteracrylat und/oder -methacrylat zusammensetzt. Polyesteracrylate sind z.B. Polykondensationsprodukte von α,β-ethylenisch ungesättigten Mono- und/oder Dicarbonsäuren und deren Anhydride mit Polyesterpolyolen. Geeignete Polyesterpolyole sind lineare und verzweigte Polymere mit endständigen OH-Gruppen, z.B. mit mindestens zwei endständigen OH-Gruppen. Polyesterpolyole können durch Veresterung von Di-, Tri- und/oder Polycarbonsäuren mit Di-, Tri- und/oder Polyolen hergestellt werden. Weitere geeignete Polyester(meth)acrylate sind Kondensationsprodukte von Hydroxylgruppen aufweisenden Estern der Acrylsäure und/oder Methacrylsäure mit mindestens zweiwertigen Alkoholen.

Der Begriff "-(meth)acrylat" umfasst sowohl Acrylate als auch Methacrylate.

Als Polyisocyanate können alle mindestens zwei Isocyanatgruppen pro Molekül enthaltene organische Verbindungen eingesetzt werden. Vorzugsweise werden Polyisocyanat-Präpolymere eingesetzt. Geeignete Polyisocyanate sind üblicherweise ausgewählt aus aromatischen, aliphatischen, cycloaliphatischen oder araliphatischen Polyisocyanate oder Gemischen dieser Polyisocyanate.

In einer weiteren bevorzugten Ausführungsform in Verbindung mit einer der oben oder unten genannten Ausführungsformen beträgt das Gewichtsverhältnis von hydroxylgruppenhaltiger Komponente zu Polyisocyanat 1 : 5 bis 1 : 20, besonders bevorzugt 1 : 10 bis 1 : 18, insbesondere 1 : 12 bis 1 : 14.

In einer bevorzugten Ausführungsform in Verbindung mit einer der oben oder unten genannten Ausführungsformen enthält die Lackzusammensetzung in Übereinstimmung mit der vorliegenden Erfindung mindestens ein ein hydroxylgruppenhaltiges (Meth)acrylat und mindestens ein Polyester(meth)acrylat. Vorzugsweise beträgt das Gewichtsverhältnis von hydroxylgruppenhaltigem (Meth)acrylat zu Polyester(meth)acrylat 1 : 0,3 bis 1 : 3, besonders bevorzugt 1 : 0,5 bis 1 : 1,5, insbesondere 1 : 0,9 bis 1 : 1,1.

In einer weiteren bevorzugten Ausführungsform in Verbindung mit einer der oben oder unten genannten Ausführungsformen enthält die erfindungsgemäße Lackzusammensetzung mindestens ein Schleifmittel, mindestens ein Verlaufsmittel, mindestens ein Lösemittel, mindestens ein Entgasungsmittel oder Gemische daraus.

Üblicherweise verwendete Schleifmittel sind dem Fachmann bekannte, in Lacken verwendete Schleifmittel, wie Metallsalze von Fettsäuren, z.B. Metallsalze von C16 bis C18 Fettsäuren. Vorzugsweise wird als Schleifmittel ein Zinksalz einer Fettsäure eingesetzt, besonders bevorzugt Zinkstearat.

Üblicherweise verwendete Verlaufsmittel sind dem Fachmann bekannte, in Lacken verwendete Verlaufsmittel, wie Siloxane, z.B. Methylpolysiloxan.

Üblicherweise gebräuchliche Lösemittel sind dem Fachmann bekannte, in Lacken verwendete inerte Lösemittel, wie z.B. Aceton, Methylethylketon, Butylacetat, Ethoxypropylacetat oder Butylglycolacetat. Erfindungsgemäß wird unter dem Begriff "inertes Lösemittel" ein Lösemittel verstanden, dass nicht mit den Inhaltsstoffen des Lacks reagiert.

Üblicherweise verwendete Entgasungsmittel sind dem Fachmann bekannte, in Lacken verwendete Entgasungsmittel, wie Polyvinylverbindungen und Lösungen von Polyvinylverbindungen.

In einer weiteren bevorzugten Ausführungsform in Verbindung mit einer der oben oder unten genannten Ausführungsformen enthält der Stammlack 25 bis 75 Gew.-% mindestens eines hydroxylgruppenhaltigen (Meth)acrylats, 25 bis 75 Gew.-% mindestens eines Polyester(meth)acrylats, 1 bis 5 Gew.-% mindestens eines Schleifmittels, 0,01 bis 0,5 Gew.-% mindestens eines Verlaufsmittels, 3 bis 8 Gew.-% mindestens eines Lösemittels und 0,1 bis 1 Gew.-% mindestens eines Entgasungsmittels, bezogen auf das Gesamtgewicht des Stammlacks. Besonders bevorzugt enthält der Stammlack 40 bis 60 Gew.-% mindestens eines hydroxylgruppenhaltigen (Meth)acrylats, 35 bis 45 Gew.-% mindestens eines Polyester(meth)acrylats, 1 bis 5 Gew.-% mindestens eines Schleifmittels, 0,01 bis 0,5 Gew.-% mindestens eines Verlaufsmittels, 3 bis 8 Gew.-% mindestens eines Lösemittels und 0,1 bis 1 Gew.-% mindestens eines Entgasungsmittels, bezogen auf das Gesamtgewicht des Stammlacks.

In einer bevorzugten Ausführungsform in Verbindung mit einer der oben oder unten genannten Ausführungsformen enthält der Stammlack 25 bis 75 Gew.-% mindestens eines Pentaerythritoltriacrylats oder eines Gemisches aus Pentaerythritoltriacrylat und Pentaerythritoltetraacrylat, 25 bis 75 Gew.-% mindestens eines Polyesteracrylats, 1 bis 5 Gew.-% mindestens eines Zinksalzes einer C16 bis C18 Fettsäure, 0,01 bis 0,5 Gew.-% mindestens eines Siloxans, 3 bis 8 Gew.-% mindestens eines Lösemittels und 0,1 bis 1 Gew.-% mindestens einer Lösung einer Polyvinylverbindung, bezogen auf das Gesamtgewicht des Stammlacks. Besonders bevorzugt enthält der Stammlack 40 bis 60 Gew.-% eines Gemisches aus Pentaerythritoltriacrylat und Pentaerythritoltetraacrylat, 35 bis 45 Gew.-% eines Polyesteracrylats, 1 bis 5 Gew.-% Zinkstearat, 0,01 bis 0,5 Gew.-% eines Methylpolysiloxans, 3 bis 8 Gew.-% Aceton und 0,1 bis 1 Gew.-% einer Lösung einer Polyvinylverbindung, bezogen auf das Gesamtgewicht des Stammlacks.

In einer weiteren bevorzugten Ausführungsform in Verbindung mit einer der oben oder unten genannten Ausführungsformen enthält der Härter 60 bis 90 Gew.-% mindestens eines Polyisocyanats und 10 bis 40 Gew.-% mindestens eines Lösemittels, bezogen auf das Gesamtgewicht des Härters. Besonders bevorzugt enthält der Härter 70 bis 80 Gew.-% eines Polyisocyanats und 20 bis 30 Gew.-% mindestens eines Lösemittels, bezogen auf das Gesamtgewicht des Härters. Insbesondere enthält der Härter 80 Gew.-% eines Polyisocyanats und 20 Gew.-% mindestens eines Lösemittels, bezogen auf das Gesamtgewicht des Härters.

In einer weiteren bevorzugten Ausführungsform in Verbindung mit einer der oben oder unten genannten Ausführungsformen beträgt das Gewichtsverhältnis von Stammlack zu Härter 1 : 5 bis 1 : 20, besonders bevorzugt 1 : 8 bis 1 : 12, insbesondere 1:10.

Die erfindungsgemäße Lackzusammensetzung enthält in einer bevorzugten Ausführungsform übliche, dem Fachmann bekannte, Hilfsstoffe, Additive und Zusatzstoffe, wie z.B. Verlaufs- und Benetzungsadditive, Slip-Additive, Pigmente, Farbstoffe, Füllstoffe, Nanopartikel, Lichtschutzpartikel, Anti-Vergilbungsadditive, Verdicker und Additive zur Reduktion der Oberflächenspannung. Ferner kann die erfindungsgemäße Lackzusammensetzung einen Initiator und gegebenenfalls weitere Hilfsmittel und Zusatzstoffe enthalten, die eine Aushärtung mit energiereicher Strahlung ermöglichen.

Die erfindungsgemäßen Lackzusammensetzungen bilden nach der Trocknung eine Lackschicht. Die Trocknung findet vorzugsweise bei 20 bis 40 °C für 10 bis 48 h statt. In einer besonders bevorzugten Ausführungsform findet die Trocknung mit IR-Strahlung statt.

In einer weiteren Ausführungsform in Verbindung mit einer der oben oder unten genannten Ausführungsformen betrifft die vorliegende Erfindung ein Verfahren zum Herstellen der erfindungsgemäßen Lackzusammensetzung, umfassend die folgenden Schritte:
a) Herstellen eines Stammlacks durch Vermischen der Bestandteile des Stammlacks,
b) Herstellen eines Härters durch Vermischen der Bestandteile des Härters,
c) Vermischen von Stammlack und Härter und
d) gegebenenfalls Verdünnen des Gemischs.

In einer bevorzugten Ausführungsform in Verbindung mit einer der oben oder unten genannten Ausführungsformen werden in dem erfindungsgemäßen Verfahren in Schritt a) die Komponenten des Stammlacks in einem inerten Lösemittel vorgelegt und bei 15 bis 35 °C vermischt. Das Herstellen des Härters in Schritt b) erfolgt ebenfalls bei 15 bis 35 °C gegebenenfalls in Anwesenheit eines inerten Lösemittels. Das Vermischen von Stammlack und Härter in Schritt c) erfolgt vorzugsweise bei 20 bis 30 °C.

In einer weiteren bevorzugten Ausführungsform erfolgt in Schritt d) eine Zugabe eines Verdünners. Üblicherweise verwendete Verdünner sind organische Lösungsmittel wie Ketone, Ester und Kohlenwasserstoffe. Der Verdünner wird vorzugsweise in einer Menge von 5 bis 30 Gew.-%, besonders bevorzugt 10 bis 20 Gew.-%, bezogen auf die Stammlack/Härter-Mischung eingesetzt.

Durch anschließende strahlenchemisch und/oder radikalisch induzierte Vernetzung kann diese Lackzusammensetzung zu einer besonders stabilen und resistenten Lackschicht ausgehärtet werden.

Zur strahlenchemisch induzierten Vernetzung (Aushärtung) ist elektromagnetische Strahlung geeignet, deren Energie, gegebenenfalls unter Zusatz von geeigneten Photoinitiatoren, ausreicht, um eine radikalische Polymerisation von (Meth)acrylat-Doppelbindungen zu bewirken. Vorzugsweise erfolgt die strahlenchemisch induzierte Vernetzung durch Strahlung mit einer Wellenlänge von kleiner 400 nm, wie UV-, Elektronen-, Röntgen- oder Gammastrahlen, besonders bevorzugt durch UV-Strahlung. Die üblicherweise verwendeten Photoinitiatoren sind dem Fachmann bekannt und beispielsweise in der EP-A-2 113 523 beschrieben.

Die Vernetzung kann auch thermisch-radikalisch unter Zusatz der üblichen Polymerisationsinitiatoren erfolgen. Dazu zählen Verbindungen, die unter den Vernetzungsbedingungen in Radikale zerfallen, wie Peroxide, Hydroperoxide, Persulfate und Azoverbindungen.

In einer weiteren Ausführungsform in Verbindung mit einer der oben oder unten genannten Ausführungsformen betrifft die vorliegende Erfindung die Verwendung der erfindungsgemäßen Lackzusammensetzung als Grundierlack.

Vorzugsweise wird die erfindungsgemäße Lackzusammensetzung als Grundierlack für Hölzer verwendet.

In einer anderen Ausführungsform in Verbindung mit einer der oben oder unten genannten Ausführungsformen betrifft die vorliegende Erfindung eine Beschichtung, umfassend eine Grundierschicht enthaltend die Lackzusammensetzung gemäß der vorliegenden Erfindung und eine Decklackschicht.

Die erfindungsgemäße Beschichtung enthält in einer bevorzugten Ausführungsform in Verbindung mit einer der oben oder unten genannten Ausführungsformen zusätzlich eine Isolierschicht. Die Isolierschicht ist zwischen dem zu lackierende Material und der Grundierschicht aufgebracht.

In einer bevorzugten Ausführungsform in Verbindung mit einer der oben oder unten genannten Ausführungsformen ist die Decklackschicht eine Klarlackschicht, besonders bevorzugt ist die Decklackschicht farblos. In einer alternativen Ausführungsform in Verbindung mit einer der oben oder unten genannten Ausführungsformen ist die Decklackschicht farbig.

Die Gesamtschichtdicke der erfindungsgemäßen Beschichtung beträgt in einer bevorzugten Ausführungsform in Verbindung mit einer der oben oder unten genannten Ausführungsformen vorzugsweise 200 bis 1000 µm, besonders bevorzugt 300 bis 500 µm.

Die erfindungsgemäße Lackzusammensetzung ermöglicht die Bereitstellung einer materialspezifischen Beschichtung, die auf das Material sowie deren Verwendung abgestimmt ist.

Überaschenderweise konnten mit der vorliegenden Erfindung eine Lackzusammensetzung und eine Beschichtung bereitgestellt werden, die eine besonders glatte Lackschicht erzeugt. Insbesondere auf Holz konnte eine ebene und glatte Schicht aufgebracht werden, die auf dem Holz eine gewünschte Fülle erzeugt und gleichzeitig kein oder nur geringes Beifallen aufweist. Somit bleibt die Struktur des Holzes erhalten und weiterhin sichtbar ohne negative optische Beeinträchtigungen.

Mittels der Lackzusammensetzung in Übereinstimmung mit der vorliegenden Erfindung ist es möglich, ein geringes Beifallen zu erreichen. Im Vergleich mit den kommerziell erhältlichen Produkten, ist die Anzahl der Lagen der Grundierschicht bei Verwendung der erfindungsgemäßen Lackzusammensetzung um 50 bis 75% geringer. Ferner bleibt selbst in dicken Schichten die Transparenz erhalten.

Durch die erfindungsgemäße Beschichtung kann die natürliche Struktur und das natürliche Aussehen des beschichteten Materials erhalten werden. Gleichzeitig bietet die erfindungsgemäße Beschichtung einen Schutz des beschichteten Materials vor äußeren Einflüssen, z.B. mechanische Einwirkungen, wie Verkratzen.

Durch die Reduzierung der Anzahl der Lagen der Grundierschicht werden zudem der Arbeitsaufwand und Kosten verringert.

## Patentansprüche

1. Lackzusammensetzung, umfassend
einen Stammlack, enthaltend mindestens eine hydroxylgruppenhaltige Komponente, und
einen Härter, enthaltend mindestens ein Polyisocyanat,
**dadurch gekennzeichnet, dass** das Gewichtsverhältnis von hydroxylgruppenhaltiger Komponente zu Polyisocyanat 1 : 2 bis 1 : 50 beträgt.

2. Lackzusammensetzung nach Anspruch 1, **dadurch gekennzeichnet, dass** die hydroxylgruppenhaltige Komponente ausgewählt ist aus einem hydroxylgruppenhaltigen (Meth)acrylat, einem Polyester(meth)acrylat oder Gemischen daraus.

3. Lackzusammensetzung nach Anspruch 2, **dadurch gekennzeichnet, dass** die hydroxylgruppenhaltige Komponente ein Pentaerythritoltriacrylat oder ein Gemisch aus Pentaerythritoltriacrylat und Pentaerythritoltetraacrylat ist.

4. Lackzusammensetzung nach einem der Ansprüche 1 bis 3, **dadurch gekennzeichnet, dass** das Gewichtsverhältnis von hydroxylgruppenhaltiger Komponente zu Polyisocyanat 1 : 10 bis 1 : 18 beträgt.

5. Lackzusammensetzung nach einem der Ansprüche 1 bis 4, **dadurch gekennzeichnet, dass** der Stammlack mindestens ein hydroxylgruppenhaltiges (Meth)acrylat und mindestens ein Polyester(meth)acrylat enthält und das Gewichtsverhältnis von hydroxylgruppenhaltigem (Meth)acrylat zu Polyester(meth)acrylat 1 : 0,3 bis 1 : 3 beträgt.

6. Lackzusammensetzung nach einem der Ansprüche 1 bis 5, weiter enthaltend mindestens ein Schleifmittel, mindestens ein Verlaufsmittel, mindestens ein Lösemittel, mindestens ein Entgasungsmittel oder Gemische daraus.

7. Lackzusammensetzung nach einem der Ansprüche 1 bis 6, wobei der Stammlack
| | |
|---|---|
| 25 bis 75 Gew.-% | mindestens eines hydroxylgruppenhaltigen (Meth)acrylats, |
| 25 bis 75 Gew.-% | mindestens eines Polyesteracrylats, |
| 1 bis 5 Gew.-% | mindestens eines Schleifmittels, |
| 0,01 bis 0,5 Gew.-% | mindestens eines Verlaufsmittels, |
| 3 bis 8 Gew.-% | mindestens eines Lösemittels und |
| 0,1 bis 1 Gew.-% | mindestens eines Entgasungsmittels, |
bezogen auf das Gesamtgewicht des Stammlacks, enthält.

8. Lackzusammensetzung nach einem der Ansprüche 1 bis 7, wobei der Härter
| | |
|---|---|
| 60 bis 90 Gew.-% | mindestens eines Polyisocyanats und |
| 10 bis 40 Gew.-% | mindestens eines Lösemittels, |
bezogen auf das Gesamtgewicht des Härters, enthält.

9. Lackzusammensetzung nach einem der Ansprüche 1 bis 8, wobei das Gewichtsverhältnis von Stammlack zu Härter 1 : 5 bis 1 : 20 beträgt.

10. Lackzusammensetzung nach einem der Ansprüche 6 bis 9, wobei das Schleifmittel ein Metallsalz einer Fettsäure ist.

11. Lackzusammensetzung nach einem der Ansprüche 6 bis 10, wobei das Verlaufsmittel ein Siloxan ist.

12. Lackzusammensetzung nach einem der Ansprüche 6 bis 11, wobei das Entgasungsmittel eine Polyvinylverbindung ist.

13. Verfahren zum Herstellen einer Lackzusammensetzung nach einem der Ansprüche 1 bis 12, umfassend die folgenden Schritte:
a) Herstellen eines Stammlacks durch Vermischen der Bestandteile des Stammlacks,
b) Herstellen eines Härters durch Vermischen der Bestandteile des Härters,
c) Vermischen von Stammlack und Härter und
d) gegebenenfalls Verdünnen des Gemischs.

14. Verwendung der Lackzusammensetzung nach einem der Ansprüche 1 bis 12 als Grundierlack.

15. Beschichtung, umfassend eine Grundierschicht enthaltend die Lackzusammensetzung nach einem der Ansprüche 1 bis 12 und eine Decklackschicht und gegebenenfalls eine Isolierschicht.
